# EUROPEAN PATENT SPECIFICATION

(11) **EP 4 116 112 B1**
(45) Date of publication and mention of the grant of the patent: **06.11.2024**
(21) Application number: 22178957.1
(22) Date of filing: 14.06.2022
(51) Int. Cl.: B60C 15/00, B60C 15/06, B60C 9/22

(54) **HEAVY DUTY TIRE**
SCHWERLASTREIFEN
PNEU POIDS LOURD

(30) Priority: 07.07.2021 JP 2021112570
(43) Date of publication of application: 11.01.2023
(73) Proprietor: Sumitomo Rubber Industries, Ltd., Kobe-shi, Hyogo-ken 651-0072 (JP)
(72) Inventor: KODA, Yuriko, Kobe-shi, 651-0072 (JP)
(74) Representative: Manitz Finsterwald Patent- und Rechtsanwaltspartnerschaft mbB

(56) References cited:
- EP-A1- 1 787 825
- JP-A- 2005 313 735
- JP-A- 2020 066 243
- US-A1- 2012 318 427

## Description

### BACKGROUND OF THE INVENTION

### Field of the Invention

The present invention relates to a heavy duty tire.

### Background Art

For heavy duty tires, the application of a technology for suppressing radial growth of a tire has been considered in order to prevent occurrence of uneven wear. For example, in the tire disclosed in International Publication No. WO2014/010091, a band including a band cord extending substantially in a circumferential direction is adopted in order to suppress radial growth of the tire.

When a tire expands, for example, each side portion thereof stretches in the radial direction of the tire. When a band is used in order to prevent occurrence of uneven wear, the band suppresses the stretch of each side portion. Depending on the degree of suppression, there is a concern that specific strain may occur in each side portion.

A large load acts on each bead portion of a heavy duty tire. In a low-flatness heavy duty tire having a nominal aspect ratio of 65% or less, each side portion is shorter than that in a high-flatness tire. Each side portion of the low-flatness tire is likely to be influenced by strain generated in a bead portion thereof.

The use of a band is effective for preventing occurrence of uneven wear. When a band is used for a low-flatness tire, strain is likely to occur in each side portion thereof. There is a concern that damage due to strain may occur in the side portion; in other words, the durability of the tire may decrease.
EP 1 787 825 A1 discloses a heavy duty tire comprising the features according to the preamble of claim 1.
US 2012/0318427 A1 discloses a heavy duty tire comprising features according to a related technology, wherein in a radial direction, a position of a top of a first bead apex coincides with a position of an end of a turned-up portion of a carcass, or in the radial direction, the top of the first apex is located inward of the end of the turned-up portion.
JP 2005 313735 A discloses a heavy duty tire comprising features according to a related technology.
JP 2020 066243 A also discloses a heavy duty tire comprising features according to a related technology.

The present invention has been made in view of such circumstances, and an object of the present invention is to provide a heavy duty tire that can ensure durability and improve uneven wear resistance.

### SUMMARY OF THE INVENTION

A heavy duty tire according to an aspect of the present invention has a nominal aspect ratio of 65% or less. The heavy duty tire includes: a tread that comes into contact with a road surface; a pair of sidewalls that are each connected to an end of the tread and located inward of the tread in a radial direction; a pair of beads that are each located inward of the sidewall in the radial direction; a carcass that is located inward of the tread and the pair of sidewalls; and a band that is located between the tread and the carcass in the radial direction and includes a spirally wound band cord. At least three circumferential grooves are formed on the tread, whereby at least four land portions are formed in the tread. Among the at least three circumferential grooves, a circumferential groove located on each outer side in an axial direction is a shoulder circumferential groove, and a land portion located outward of the shoulder circumferential groove in the axial direction is a shoulder land portion. Each bead includes a core, a first apex located outward of the core in the radial direction, and a second apex located outward of the first apex in the radial direction. The carcass includes a carcass ply, and the carcass ply includes a ply body extending between one bead and the other bead, and a pair of turned-up portions connected to the ply body and turned up around the beads from an inner side toward the outer side in the axial direction. The band includes a full band having ends opposed to each other across an equator plane, and a pair of edge bands located outward of the ends of the full band in the radial direction. The first apex is harder than the second apex. In the radial direction, a position of a top of the first apex coincides with a position of an end of the turned-up portion, or in the radial direction, the top of the first apex is located inward of the end of the turned-up portion.

Moreover, in the heavy duty tire, each end of the full band is located outward of the shoulder circumferential groove in the axial direction.

Preferably, in the heavy duty tire, a top surface, of the first apex, which forms a boundary with the second apex has a contour that is curved outward in the radial direction.

Preferably, in the heavy duty tire, a ratio of a height of the first apex to a height of the turned-up portion is not less than 0.45.

Preferably, in the heavy duty tire, a ratio of a hardness of the first apex to a hardness of the second apex is not less than 1.4 and not greater than 2.0.

Preferably, in the heavy duty tire, a ratio of a distance in the axial direction from the shoulder circumferential groove to the end of the full band, to a width in the axial direction of the shoulder land portion, is not less than 10% and not greater than 50%.

Preferably, in the heavy duty tire, a distance in the axial direction from the end of the full band to an inner end of the edge band is not less than 10 mm.

According to the present invention, a heavy duty tire that can ensure durability and improve uneven wear resistance is obtained.

### BRIEF DESCRIPTION OF THE DRAWINGS

FIG. 1 is a cross-sectional view showing a part of a heavy duty tire according to an embodiment of the present invention;
FIG. 2 is a schematic diagram illustrating the configuration of a reinforcing layer;
FIG. 3 is an enlarged cross-sectional view showing a tread portion of the tire in FIG. 1;
FIG. 4 is an enlarged cross-sectional view showing a bead portion of the tire in FIG. 1; and
FIG. 5 is an enlarged cross-sectional view showing a bead portion of a tire of Comparative Example 1.

### DETAILED DESCRIPTION

Hereinafter, the present invention will be described in detail based on preferred embodiments with appropriate reference to the drawings.

In the present disclosure, a state where a tire is fitted on a normal rim, the internal pressure of the tire is adjusted to a normal internal pressure, and no load is applied to the tire is referred to as a normal state.

In the present disclosure, unless otherwise specified, the dimensions and angles of each component of the tire are measured in the normal state. The dimensions and angles of each component in a meridian cross-section of the tire, which cannot be measured in a state where the tire is fitted on the normal rim, are measured in a cross-section of the tire obtained by cutting the tire along a plane including a rotation axis, with the distance between right and left beads being made equal to the distance between the beads in the tire that is fitted on the normal rim.

The normal rim means a rim specified in a standard on which the tire is based. The "standard rim" in the JATMA standard, the "Design Rim" in the TRA standard, and the "Measuring Rim" in the ETRTO standard are normal rims. A rim in the present disclosure means a normal rim unless otherwise specified.

The normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

In the present disclosure, the "nominal aspect ratio" is the "nominal aspect ratio" included in "tyre designation" specified in JIS D4202 "Automobile tyres-Designation and dimensions".

In the present disclosure, a tread portion of the tire is a portion of the tire that comes into contact with a road surface. A bead portion is a portion of the tire that is fitted to a rim. A side portion is a portion of the tire that extends between the tread portion and the bead portion. The tire includes a tread portion, a pair of bead portions, and a pair of side portions as portions thereof.

The rim includes a seat and a flange. When the tire is fitted to the rim, the inner circumferential surface of the bead portion is placed on the seat, and the outer surface of the bead portion comes into contact with the flange.

In the present disclosure, of the elements forming the tire, the hardness of each element formed from a crosslinked rubber is measured according to the standards of JIS K6253 under a temperature condition of 23°C using a type A durometer.

In the present disclosure, the number of cords included per 5 cm width of a tire element, including aligned cords, is represented as the density of cords included in this element (unit: ends/5 cm). Unless otherwise specified, the density of the cords is obtained in a cross-section of the element obtained by cutting the element along a plane perpendicular to the longitudinal direction of the cords.

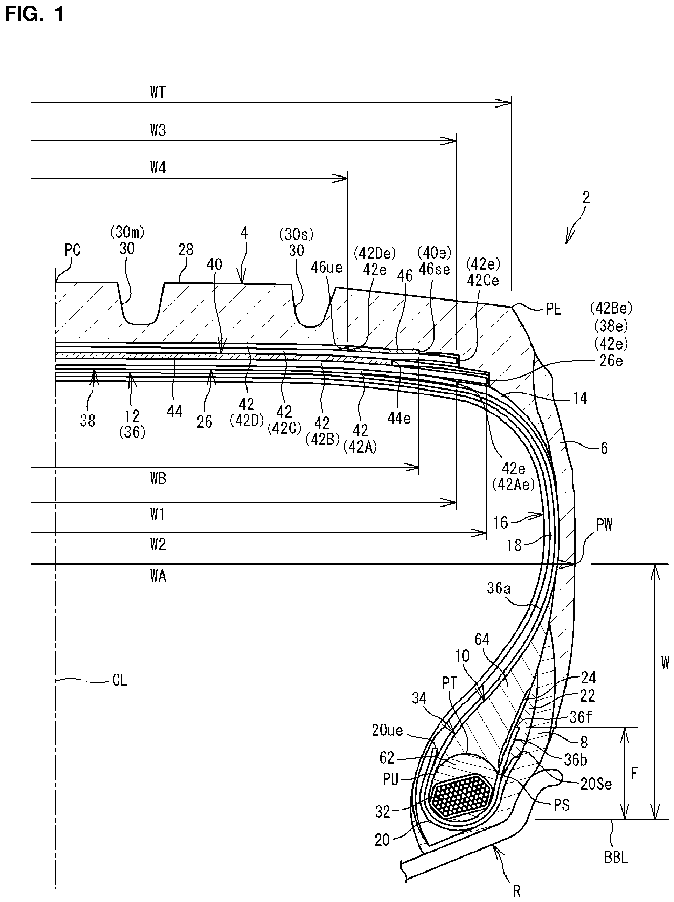

FIG. 1 shows a part of a heavy duty tire 2 (hereinafter, also referred to simply as "tire 2") according to an embodiment of the present invention. The tire 2 is mounted to a vehicle such as a truck and a bus. The nominal aspect ratio of the tire 2 is not greater than 65%. In other words, the tire 2 has a nominal aspect ratio of 65% or less. The tire 2 is a low-flatness tire.

FIG. 1 shows a part of a cross-section (hereinafter, also referred to as meridian cross-section) of the tire 2 along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. An alternate long and short dash line CL represents the equator plane of the tire 2.

In FIG. 1, the tire 2 is fitted on a rim R. The rim R is a normal rim. The interior of the tire 2 is filled with air to adjust the internal pressure of the tire 2. The tire 2 fitted on the rim R is also referred to as a tire-rim assembly. The tire-rim assembly includes the rim R and the tire 2 fitted on the rim R.

In FIG. 1, a solid line BBL is a bead base line extending in the axial direction. This bead base line is a line that defines the rim diameter (see JATMA or the like) of the rim R.

In FIG. 1, a position indicated by reference character PW is an outer end in the axial direction of the tire 2. In the case where decorations such as patterns and letters are present on the outer surface of the tire 2, the outer end PW is specified on the basis of a virtual outer surface obtained on the assumption that the decorations are not present.

In FIG. 1, a length indicated by reference character WA is the maximum width of the tire 2, that is, the cross-sectional width (see JATMA or the like) of the tire 2. The cross-sectional width WA of the tire 2 is the distance in the axial direction from one outer end PW to the other outer end PW. Each outer end PW is a position (hereinafter, maximum width position) at which the tire 2 has the maximum width.

The tire 2 includes a tread 4, a pair of sidewalls 6, a pair of chafers 8, a pair of beads 10, a carcass 12, a pair of cushion layers 14, an inner liner 16, an insulation 18, a pair of steel fillers 20, a pair of interlayer strips 22, a pair of edge strips 24, and a reinforcing layer 26.

The tread 4 comes into contact with a road surface at an outer surface thereof. The outer surface of the tread 4 is a tread surface 28. In FIG. 1, reference character PC represents the point of intersection of the tread surface 28 and the equator plane CL. The point of intersection PC corresponds to the equator of the tire 2.

In FIG. 1, reference character PE represents an end of the tread surface 28. A length indicated by reference character WT is the width of the tread 4. The width WT of the tread 4 is the distance in the axial direction from one end PE of the tread surface 28 to the other end PE of the tread surface 28. When the ends PE of the tread surface 28 cannot be identified from the appearance, the position on the tread surface 28 corresponding to each outer end in the axial direction of a ground-contact surface obtained when the normal load is applied as a vertical load to the tire 2 in the normal state with a camber angle of the tire 2 being set to 0° and the tire 2 is brought into contact with a road surface that is a flat surface, is used as each end PE of the tread surface 28.

The tread 4 is formed from a crosslinked rubber. The tread 4 includes a cap layer and a base layer which are not shown. The cap layer is formed from a crosslinked rubber for which wear resistance and grip performance are taken into consideration, and forms the tread surface 28. The base layer is formed from a crosslinked rubber that has low heat generation properties, and is located inward of the cap layer.

In the tire 2, at least three circumferential grooves 30 are formed on the tread 4. On the tread 4 of the tire 2 shown in FIG. 1, four circumferential grooves 30 are formed. These circumferential grooves 30 are aligned in the axial direction and continuously extend in the circumferential direction.

Among the four circumferential grooves 30 formed on the tread 4, the circumferential groove 30 located on each outer side in the axial direction is a shoulder circumferential groove 30s. The circumferential groove 30 located inward of the shoulder circumferential groove 30s in the axial direction is a middle circumferential groove 30m. In the tire 2, the four circumferential grooves 30 include a pair of the middle circumferential grooves 30m and a pair of the shoulder circumferential grooves 30s.

In the tire 2, from the viewpoint of contribution to drainage performance and traction performance, the groove width of each middle circumferential groove 30m is preferably not less than 2% and not greater than 10% of the width WT of the tread 4. The groove depth of each middle circumferential groove 30m is preferably not less than 10 mm and not greater than 25 mm. The groove width of each shoulder circumferential groove 30s is preferably not less than 1% and not greater than 7% of the width WT of the tread 4. The groove depth of each shoulder circumferential groove 30s is preferably not less than 10 mm and not greater than 25 mm.

Each sidewall 6 is connected to an end of the tread 4. The sidewall 6 is located inward of the tread 4 in the radial direction. The sidewall 6 is formed from a crosslinked rubber. The sidewall 6 protects the carcass 12.

Each chafer 8 is located inward of the sidewall 6 in the radial direction. The chafer 8 comes into contact with the rim R. The chafer 8 is formed from a crosslinked rubber for which wear resistance is taken into consideration.

Each bead 10 is located inward of the chafer 8 in the axial direction. The bead 10 is located inward of the sidewall 6 in the radial direction. The bead 10 includes a core 32 and an apex 34.

The core 32 extends in the circumferential direction. The core 32 includes a wound wire made of steel. The core 32 has a substantially hexagonal cross-sectional shape. The apex 34 is formed from a crosslinked rubber. The apex 34 is tapered outward on the radially outer side of the core 32.

The carcass 12 is located inward of the tread 4, the pair of sidewalls 6, and the pair of chafers 8. The carcass 12 extends on and between one bead 10 and the other bead 10. The carcass 12 includes at least one carcass ply 36. The carcass 12 of the tire 2 is composed of one carcass ply 36.

The carcass ply 36 is turned up around each bead 10 from the inner side toward the outer side in the axial direction. The carcass ply 36 includes a ply body 36a which extends between one bead 10 and the other bead 10, and a pair of turned-up portions 36b which are connected to the ply body 36a and turned up around the respective beads 10 from the inner side toward the outer side in the axial direction.

The carcass ply 36 includes a large number of carcass cords aligned with each other, which are not shown. These carcass cords are covered with a topping rubber. Each carcass cord intersects the equator plane CL. An angle of the carcass cords relative to the equator plane CL is not less than 70° and not greater than 90°. The carcass 12 has a radial structure. Steel cords are used as the carcass cords.

In FIG. 1, a length indicated by a double-headed arrow F is the height of the turned-up portion 36b. The height F of the turned-up portion 36b is the distance in the radial direction from the bead base line BBL to an end 36f of the turned-up portion 36b. A length indicated by a double-headed arrow W is a maximum width height. The maximum width height W is the distance in the radial direction from the bead base line BBL to the maximum width position PW.

In the tire 2, from the viewpoint of ensuring the stiffness of the bead portion, the ratio (F/W) of the height F of the turned-up portion 36b to the maximum width height W is preferably not less than 0.30. From the viewpoint of suppressing concentration of strain on the end 36f of the turned-up portion 36b, the ratio (F/W) is preferably not greater than 0.45.

Each cushion layer 14 is located between the reinforcing layer 26 and the carcass 12 at an end 26e of the reinforcing layer 26. The cushion layer 14 is formed from a flexible crosslinked rubber.

The inner liner 16 is located inward of the carcass 12. The inner liner 16 forms an inner surface of the tire 2. The inner liner 16 is formed from a crosslinked rubber that has a low gas permeability coefficient. The inner liner 16 maintains the internal pressure of the tire 2.

The insulation 18 is located between the carcass 12 and the inner liner 16. The insulation 18 is joined to the carcass 12 and is joined to the inner liner 16. In other words, the inner liner 16 is joined to the carcass 12 via the insulation 18. The insulation 18 is formed from a crosslinked rubber for which adhesiveness is taken into consideration.

Each steel filler 20 is located at a bead 10 portion. The steel filler 20 is turned up around the core 32 from the inner side toward the outer side in the axial direction along the carcass ply 36.

In the tire 2, one end (hereinafter, inner end 20ue) of the steel filler 20 is located inward of the end 36f of the turned-up portion 36b in the radial direction. The other end (hereinafter, outer end 20se) of the steel filler 20 is located inward of the inner end 20ue of the steel filler 20 in the radial direction.

The steel filler 20 includes a large number of filler cords aligned with each other, which are not shown. In the steel filler 20, the filler cords are covered with a topping rubber. Steel cords are used as the filler cords.

Each interlayer strip 22 is located between the apex 34 and the chafer 8. The interlayer strip 22 covers the end 36f of the turned-up portion 36b and the outer end 20se of the steel filler 20. The interlayer strip 22 is formed from a crosslinked rubber.

Each edge strip 24 is located between the apex 34 and the interlayer strip 22. The end 36f of the turned-up portion 36b is interposed between the edge strip 24 and the interlayer strip 22. The edge strip 24 is formed from a crosslinked rubber. The material of the edge strip 24 of the tire 2 is the same as the material of the interlayer strip 22.

The reinforcing layer 26 is located inward of the tread 4 in the radial direction. The reinforcing layer 26 is located between the carcass 12 and the tread 4. The reinforcing layer 26 includes a belt 38 and a band 40.

The belt 38 includes a plurality of belt plies 42 aligned in the radial direction. Each belt ply 42 is disposed such that both ends thereof are opposed to each other across the equator plane CL. The belt 38 of the tire 2 includes four belt plies 42. Among the four belt plies 42, the belt ply 42 located on the inner side in the radial direction is a first belt ply 42A. The belt ply 42 located outward of the first belt ply 42A is a second belt ply 42B. The belt ply 42 located outward of the second belt ply 42B is a third belt ply 42C. The belt ply 42 located outward of the third belt ply 42C is a fourth belt ply 42D. The belt 38 may be composed of two belt plies 42, or may be composed of three belt plies 42.

In FIG. 1, a length indicated by reference character W1 is the width in the axial direction of the first belt ply 42A. A length indicated by reference character W2 is the width in the axial direction of the second belt ply 42B. A length indicated by reference character W3 is the width in the axial direction of the third belt ply 42C. A length indicated by reference character W4 is the width in the axial direction of the fourth belt ply 42D. The width in the axial direction of each belt ply 42 is the distance in the axial direction from one end 42e of the belt ply 42 to the other end 42e of the belt ply 42.

In the tire 2, the second belt ply 42B has the largest width W2 in the axial direction, and the fourth belt ply 42D has the smallest width W4 in the axial direction. The first belt ply 42A has the width W1 in the axial direction equal to the width W3 in the axial direction of the third belt ply 42C. The width W1 in the axial direction of the first belt ply 42A may be larger than the width W3 in the axial direction of the third belt ply 42C.

In the tire 2, from the viewpoint of ensuring the stiffness of the tread portion, the ratio (W1/WT) of the width W1 in the axial direction of the first belt ply 42A to the width WT of the tread 4 is preferably not less than 0.80 and preferably not greater than 0.90. The ratio (W2/WT) of the width W2 in the axial direction of the second belt ply 42B to the width WT of the tread 4 is preferably not less than 0.85 and preferably not greater than 0.95. The ratio (W3/WT) of the width W3 in the axial direction of the third belt ply 42C to the width WT of the tread 4 is preferably not less than 0.80 and preferably not greater than 0.90. The ratio (W4/WT) of the width W4 in the axial direction of the fourth belt ply 42D to the width WT of the tread 4 is preferably not less than 0.55 and preferably not greater than 0.65.

An end 38e of the belt 38 of the tire 2 is represented as an end 42e of the belt ply 42 having the largest width in the axial direction among the plurality of belt plies 42 included in the belt 38. As described above, in the tire 2, the second belt ply 42B has the largest width in the axial direction. The end 38e of the belt 38 of the tire 2 is represented as an end 42Be of the second belt ply 42B.

As shown in FIG. 1, an end 42De of the fourth belt ply 42D having the smallest width W4 in the axial direction is located outward of the shoulder circumferential groove 30s in the axial direction. In the tire 2, the ends 42e of all the belt plies 42 included in the belt 38 are located outward of the shoulder circumferential groove 30s in the axial direction.

The band 40 includes a full band 44 and a pair of edge bands 46. As shown in FIG. 1, the full band 44 has ends 44e opposed to each other across the equator plane CL. The pair of edge bands 46 are disposed so as to be spaced apart from each other in the axial direction with the equator plane CL therebetween. The fourth belt ply 42D is located between the pair of edge bands 46.

In the tire 2, each edge band 46 is located between the tread 4 and the full band 44. The edge band 46 is located outward of the end 44e of the full band 44 in the radial direction. In the axial direction, an inner end 46ue of the edge band 46 is located inward of the end 44e of the full band 44. In the axial direction, an outer end 46se of the edge band 46 is located outward of the end 44e of the full band 44. In the axial direction, the outer end 46se of the edge band 46 is located between the end 44e of the full band 44 and the end 38e of the belt 38 (specifically, an end 42Ce of the third belt ply 42C). The edge band 46 overlaps the end 44e of the full band 44 in the radial direction. In the tire 2, the position of the outer end 46se of the edge band 46 may coincide with the position of the end 44e of the full band 44 in the axial direction.

As described above, in the axial direction, the outer end 46se of the edge band 46 is located outward of the end 44e of the full band 44. In the tire 2, the outer end 46se of the edge band 46 is an end 40e of the band 40. As shown in FIG. 1, the end 40e of the band 40 is located inward of the end 38e of the belt 38 in the axial direction. In the tire 2, the end 38e of the belt 38 is the end 26e of the reinforcing layer 26.

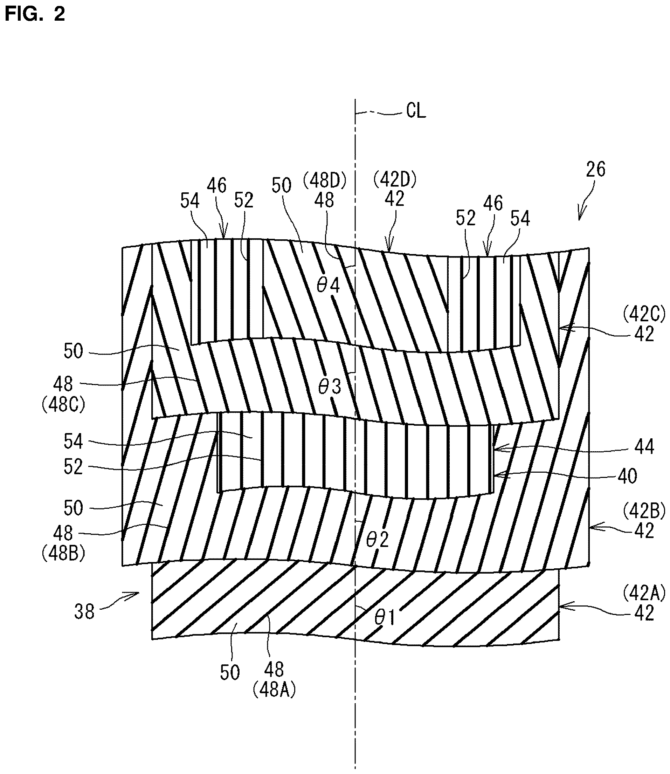

FIG. 2 shows the configuration of the reinforcing layer 26. In FIG. 2, the right-left direction is the axial direction of the tire 2, and the up-down direction is the circumferential direction of the tire 2. The direction perpendicular to the surface of the drawing sheet of FIG. 2 is the radial direction of the tire 2. The front side of the drawing sheet of FIG. 2 is the outer side in the radial direction, and the back side of this drawing sheet is the inner side in the radial direction.

As shown in FIG. 2, each belt ply 42 included in the belt 38 includes a large number of belt cords 48 aligned with each other. In FIG. 2, for convenience of description, the belt cords 48 are represented by solid lines, but the belt cords 48 are covered with a topping rubber 50. The belt cords 48 of the tire 2 are steel cords. In the tire 2, the density of the belt cords 48 in each belt ply 42 is not less than 15 ends/5 cm and not greater than 30 ends/5 cm.

The belt cords 48 in each belt ply 42 are tilted relative to the circumferential direction. The direction in which the belt cords 48 included in the first belt ply 42A are tilted (hereinafter, the tilt direction of first belt cords 48A) is the same as the direction in which the belt cords 48 included in the second belt ply 42B are tilted (hereinafter, the tilt direction of second belt cords 48B). The tilt direction of the second belt cords 48B is opposite to the direction in which the belt cords 48 included in the third belt ply 42C are tilted (hereinafter, the tilt direction of third belt cords 48C). The tilt direction of the third belt cords 48C is the same as the direction in which the belt cords 48 included in the fourth belt ply 42D are tilted (hereinafter, the tilt direction of fourth belt cords 48D). The tilt direction of the first belt cords 48A may be opposite to the tilt direction of the second belt cords 48B, and the tilt direction of the fourth belt cords 48D may be opposite to the tilt direction of the third belt cords 48C. In the tire 2, from the viewpoint of obtaining a ground-contact surface whose shape change is suppressed, the tilt direction of the second belt cords 48B is preferably opposite to the tilt direction of the third belt cords 48C.

In FIG. 2, an angle θ1 is an angle (hereinafter, first tilt angle θ1) of the first belt cords 48A relative to the equator plane CL. An angle θ2 is an angle (hereinafter, second tilt angle θ2) of the second belt cords 48B relative to the equator plane CL. An angle θ3 is an angle (hereinafter, third tilt angle θ3) of the third belt cords 48C relative to the equator plane CL. An angle θ4 is an angle (hereinafter, fourth tilt angle θ4) of the fourth belt cords 48D relative to the equator plane CL.

In the tire 2, each of the first tilt angle θ1, the second tilt angle θ2, the third tilt angle θ3, and the fourth tilt angle θ4 is preferably not less than 10° and preferably not greater than 60°. From the viewpoint of effectively restraining movement of the tire 2 and ensuring shape stability of the ground-contact surface, the first tilt angle θ1 is preferably not less than 40° and preferably not greater than 60°. The second tilt angle θ2 is preferably not less than 10° and preferably not greater than 20°. The third tilt angle θ3 is preferably not less than 10° and preferably not greater than 20°. The fourth tilt angle θ4 is preferably not less than 10° and preferably not greater than 60°.

As shown in FIG. 2, the full band 44 and the pair of edge bands 46 included in the band 40 each include a spirally wound band cord 52. In FIG. 2, for the convenience of description, the band cords 52 are represented by solid lines, but each band cord 52 is covered with a topping rubber 54.

In the tire 2, the band cords 52 are steel cords or cords formed from an organic fiber (hereinafter, organic fiber cords). In the case where organic fiber cords are used as the band cords 52, examples of the organic fiber include nylon fibers, polyester fibers, rayon fibers, and aramid fibers. In the tire 2, as the band cord 52 of the full band 44 and the band cords 52 of the edge bands 46, the same cord may be used, or different cords may be used. The band cords 52 used for the full band 44 and the edge bands 46 are determined according to the specifications of the tire 2.

As described above, the full band 44 includes the spirally wound band cord 52. The full band 44 has a jointless structure. In the full band 44, an angle of the band cord 52 relative to the circumferential direction is preferably not greater than 5° and more preferably not greater than 2°. The band cord 52 of the full band 44 extends substantially in the circumferential direction.

The density of the band cord 52 in the full band 44 is not less than 20 ends/5 cm and not greater than 35 ends/5 cm. The density of the band cord 52 in the full band 44 is represented as the number of cross-sections of the band cord 52 included per 5 cm width of the full band 44 in a cross-section of the full band 44 included in the meridian cross-section.

As described above, each edge band 46 includes the spirally wound band cord 52. The edge band 46 has a jointless structure. In the edge band 46, an angle of the band cord 52 relative to the circumferential direction is preferably not greater than 5° and more preferably not greater than 2°. The band cord 52 of the edge band 46 extends substantially in the circumferential direction.

The density of the band cord 52 in the edge band 46 is not less than 20 ends/5 cm and not greater than 35 ends/5 cm. The density of the band cord 52 in the edge band 46 is represented as the number of cross-sections of the band cord 52 included per 5 cm width of the edge band 46 in a cross-section of the edge band 46 included in the meridian cross-section.

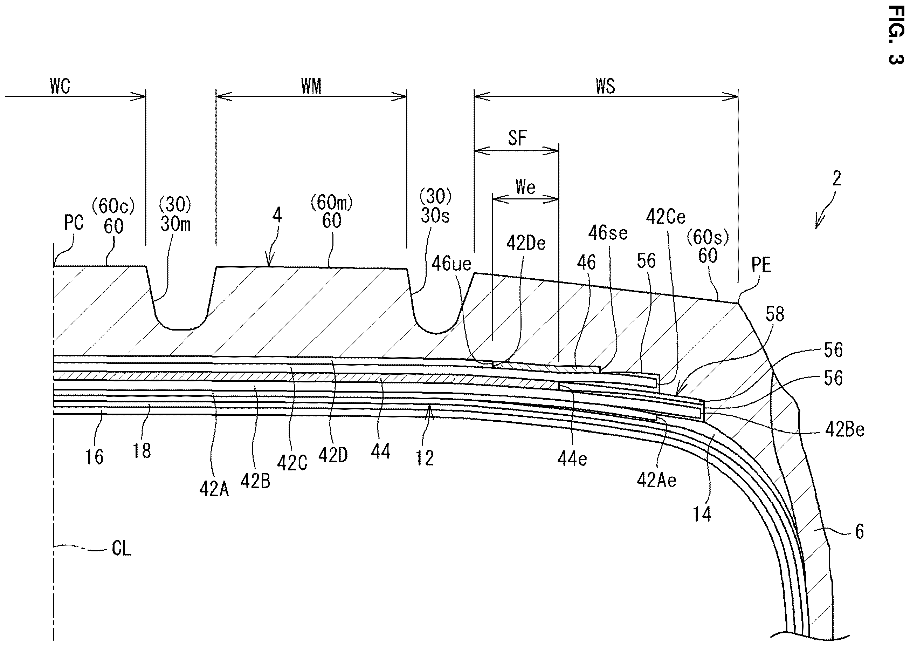

FIG. 3 shows a part of the cross-section of the tire 2 shown in FIG. 1. FIG. 3 shows the tread portion of the tire 2. In FIG. 3, the right-left direction is the axial direction of the tire 2, and the up-down direction is the radial direction of the tire 2. The direction perpendicular to the surface of the drawing sheet of FIG. 3 is the circumferential direction of the tire 2.

In the tire 2, each of the end 42Be of the second belt ply 42B and the end 42Ce of the third belt ply 42C is covered with a rubber layer 56. One rubber layer 56 is further disposed between the end 42Be of the second belt ply 42B and the end 42Ce of the third belt ply 42C, each of which is covered with the rubber layer 56. In the tire 2, an edge member 58 including three rubber layers 56 in total is formed between the end 42Be of the second belt ply 42B and the end 42Ce of the third belt ply 42C. The edge member 58 is formed from a crosslinked rubber. The edge member 58 contributes to maintaining the interval between the end 42Be of the second belt ply 42B and the end 42Ce of the third belt ply 42C. In the tire 2, a change in the positional relationship between the end 42Be of the second belt ply 42B and the end 42Ce of the third belt ply 42C due to running is suppressed. The edge member 58 is a part of the reinforcing layer 26. The reinforcing layer 26 of the tire 2 includes a pair of edge members 58 in addition to the belt 38 and the band 40.

As described above, at least three circumferential grooves 30 are formed on the tread 4. Accordingly, at least four land portions 60 are formed in the tread 4. For example, as shown in FIG. 3, in the tire 2, five land portions 60 are formed by forming four circumferential grooves 30 on the tread 4. In the present disclosure, the boundary between the outer surface of each land portion 60 and each circumferential groove 30 is an end of the land portion 60. The end of the land portion 60 is also a reference point for the groove width of the circumferential groove 30 and defines the groove opening of the circumferential groove 30.

Among the five land portions 60 formed in the tread 4, the land portion 60 located on each outer side in the axial direction is a shoulder land portion 60s. The shoulder land portion 60s is located outward of the shoulder circumferential groove 30s in the axial direction and includes the end PE of the tread surface 28. In FIG. 3, a length indicated by reference character WS is the width in the axial direction of the shoulder land portion 60s. The width WS in the axial direction is the distance in the axial direction from the inner end of the shoulder land portion 60s to the outer end of the shoulder land portion 60s (in other words, the end PE of the tread surface 28).

The land portion 60 located inward of the shoulder land portion 60s in the axial direction is a middle land portion 60m. The shoulder circumferential groove 30s is present between the middle land portion 60m and the shoulder land portion 60s. In FIG. 3, a length indicated by reference character WM is the width in the axial direction of the middle land portion 60m. The width WM in the axial direction is the distance in the axial direction from the inner end of the middle land portion 60m to the outer end of the middle land portion 60m.

The land portion 60 located inward of the middle land portion 60m in the axial direction is a center land portion 60c. The middle circumferential groove 30m is present between the center land portion 60c and the middle land portion 60m. In the tire 2, the center land portion 60c is located on the equator plane CL. In FIG. 3, a length indicated by reference character WC is the width in the axial direction of the center land portion 60c. The width WC in the axial direction is the distance in the axial direction from one end of the center land portion 60c to the other end of the center land portion 60c which is not shown.

In the tire 2, the five land portions 60 include the center land portion 60c, a pair of the middle land portions 60m, and a pair of the shoulder land portions 60s.

In the tire 2, the width WC in the axial direction of the center land portion 60c is not less than 10% and not greater than 18% of the width WT of the tread 4. The width WM in the axial direction of each middle land portion 60m is not less than 10% and not greater than 18% of the width WT of the tread 4. The width WS in the axial direction of each shoulder land portion 60s is not less than 15% and not greater than 25% of the width WT of the tread 4.

As described above, the full band 44 has the ends 44e opposed to each other across the equator plane CL. The full band 44 extends in the axial direction from the equator plane CL toward each end 44e.

In the tire 2, the full band 44 effectively restrains movement of the tread portion. A change of the shape of the tire 2, for example, a change of the contour (hereinafter, also referred to as case line) of the carcass 12, is suppressed, so that the ground-contact shape of the tire 2 is less likely to change.

Furthermore, in the tire 2, each edge band 46 is located outward of the end 44e of the full band 44 in the radial direction. The edge band 46 holds the end 44e of the full band 44. Fluctuation of the tension of the band cord 52 included in the full band 44 is suppressed, so that a break of the band cord 52 due to the fluctuation of the tension is less likely to occur. The full band 44 of the tire 2 can stably exhibit the function of suppressing a shape change. The edge band 46 is narrower than the full band 44. Therefore, tension fluctuation as in the full band 44 is less likely to occur in the band cord 52 of the edge band 46. A break is less likely to occur in the band cord 52 of the edge band 46.

In the tire 2, the full band 44 and the edge bands 46 suppress a shape change of the tire 2 due to running. The band 40 contributes to improvement of uneven wear resistance.

A large load acts on each bead portion of a tire. As described above, the tire 2 is a low-flatness tire. Each side portion of the tire 2 is shorter than each side portion of a high-flatness tire having a nominal aspect ratio greater than 65%. Each side portion of the tire 2 is likely to be influenced by strain generated in a bead portion thereof. In addition, the band 40 suppresses stretch of each side portion when the tire 2 expands. Each side portion of the tire 2 is in a situation where specific strain is likely to occur therein. In the tire 2, the band 40 is used in order to improve uneven wear resistance, but there is a concern that damage due to strain may occur in each side portion.

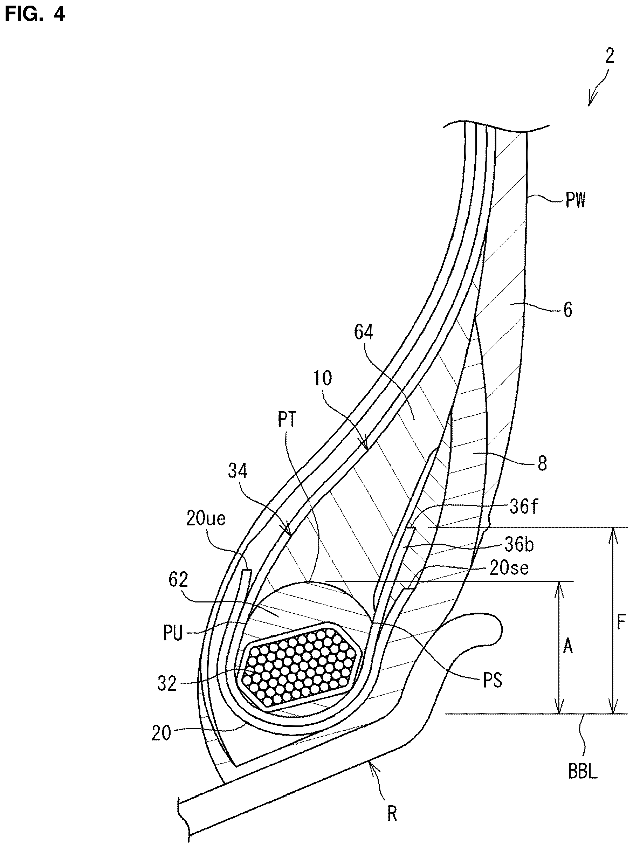

FIG. 4 shows a part of the cross-section of tire 2 shown in FIG. 1. FIG. 4 shows the bead portion of the tire 2. In FIG. 4, the right-left direction is the axial direction of the tire 2, and the up-down direction is the radial direction of the tire 2. The direction perpendicular to the surface of the drawing sheet of FIG. 4 is the circumferential direction of the tire 2.

As described above, the bead 10 includes the core 32 and the apex 34. The apex 34 of the tire 2 includes a first apex 62 and a second apex 64.

The first apex 62 is located outward of the core 32 in the radial direction. In the tire 2, the first apex 62 covers the entirety of the core 32. The second apex 64 is located outward of the first apex 62 in the radial direction. The second apex 64 is tapered outward in the radial direction.

The first apex 62 and the second apex 64 are formed from crosslinked rubbers having hardnesses different from each other. In the tire 2, the first apex 62 is harder than the second apex 64. The first apex 62 is hard, and the second apex 64 is softer than the first apex 62. Specifically, a hardness H1 of the first apex 62 is not less than 83 and not greater than 98. A hardness H2 of the second apex 64 is not less than 45 and not greater than 65.

In FIG. 4, a position indicated by reference character PT is a position on a top surface, of the first apex 62, which forms a boundary with the second apex 64. In the tire 2, the position PT is the top of the first apex 62. The top PT is also the outer end in the radial direction of the first apex 62. The top PT of the tire 2 is located between the inner end 20ue and the outer end 20se of the steel filler 20 in the radial direction.

In FIG. 4, a length indicated by a double-headed arrow A is the height of the first apex 62. The height A of the first apex 62 is the distance in the radial direction from the bead base line BBL to the top PT of the first apex 62.

As shown in FIG. 4, the top PT of the first apex 62 is located inward of the end 36f of the turned-up portion 36b in the radial direction. The position of the top PT of the first apex 62 may coincide with the position of the end 36f of the turned-up portion 36b in the radial direction. In the tire 2, in the radial direction, the position of the top PT of the first apex 62 coincides with the position of the end 36f of the turned-up portion 36b, or the top PT of the first apex 62 is located inward of the end 36f of the turned-up portion 36b. In other words, the ratio (A/F) of the height A of the first apex 62 to the height F of the turned-up portion 36b is not greater than 1.00.

In the tire 2, the hard first apex 62 is not included in a zone from the end 36f of the turned-up portion 36b to the maximum width position PW. In the tire 2 having the side portions shorter than the side portions of a high-flatness tire, this zone effectively contributes to reduction of strain generated in the side portion. In each side portion of the tire 2, the risk of occurrence of damage, caused by strain, in the side portion is reduced as compared with each side portion of a tire having the hard first apex 62 in this zone.

In the tire 2, even though the band 40 is provided, the required durability is ensured. As described above, the band 40 contributes to improvement of the uneven wear resistance of the tire 2. In the tire 2, the durability is ensured, and the uneven wear resistance is improved.

As described above, the ratio (A/F) of the height A of the first apex 62 to the height F of the turned-up portion 36b is not greater than 1.00. From the viewpoint of reducing the risk of occurrence of damage, caused by strain, in the side portion, the ratio (A/F) is preferably not greater than 0.90, more preferably not greater than 0.80, and further preferably not greater than 0.70.

In the tire 2, the ratio (A/F) is preferably not less than 0.45. Accordingly, the stiffness of the bead portion is ensured. From this viewpoint, the ratio (A/F) is more preferably not less than 0.55 and further preferably not less than 0.60.

In FIG. 4, a position indicated by reference character PU is the inner end of the top surface, of the first apex 62, which forms a boundary with the second apex 64. A position indicated by reference character PS is the outer end of the top surface of the first apex 62.

In a conventional tire, the boundary between a hard first apex and a soft second apex is formed so as to extend between a top, which is the outer end in the radial direction of the first apex, and a bottom, which is the inner end in the radial direction of the second apex. The top of the first apex is located outward of the bottom of the second apex in the radial direction, so that the first apex has a substantially triangular cross-sectional shape.

On the other hand, in the tire 2, as shown in FIG. 4, the top PT of the first apex 62 is located outward of the inner end PU and the outer end PS of the top surface in the radial direction. The top surface of the first apex 62 has a contour that is curved outward in the radial direction, as a whole. The first apex 62 has a round cross-sectional shape. The first apex 62 of the tire 2 covers a radially outer portion of the core 32 with a substantially uniform thickness as compared with a conventional first apex having a substantially triangular cross-sectional shape. The contact length between the ply body 36a and the first apex 62 of the tire 2 is shorter than the contact length with the conventional first apex.

In the tire 2, even though the height A of the first apex 62 is lower than the height F of the turned-up portion 36b, the first apex 62 effectively suppresses movement of the core 32. In the tire 2, occurrence of damage caused by movement of the core 32 is prevented. Movement of the bead portion relative to the rim R is also suppressed, so that deformation of the bead portion is suppressed. In the tire 2, strain generated in the bead portion is reduced. The reduction of the strain generated in the bead portion contributes to reduction of strain generated in the side portion. In the tire 2, the risk of occurrence of damage, caused by strain, in the side portion is reduced. From this viewpoint, the top surface, of the first apex 62, which forms a boundary with the second apex 64 preferably has a contour that is curved outward in the radial direction.

In the tire 2, the ratio (H1/H2) of the hardness H1 of the first apex 62 to the hardness H2 of the second apex 64 is preferably not less than 1.4 and not greater than 2.0.

When the ratio (H1/H2) is set to be not less than 1.4, the first apex 62 effectively suppresses movement of the core 32. From this viewpoint, the ratio (H1/H2) is more preferably not less than 1.5. When the ratio (H1/H2) is set to be not greater than 2.0, the stiffness difference between the first apex 62 and the second apex 64 is appropriately maintained. Occurrence of damage at the boundary between the first apex 62 and the second apex 64 is prevented. From this viewpoint, the ratio (H1/H2) is more preferably not greater than 1.9.

In the tire 2, the ratio (WT/WA) of the width WT of the tread 4 to the cross-sectional width WA is preferably not less than 0.60 and not greater than 0.90. When the ratio (WT/WA) is set to be not less than 0.60, the internal volume of the tire 2 is appropriately maintained. The band 40 effectively suppresses radial growth of the tire 2. Since the ground-contact shape of the tire 2 is less likely to change, good uneven wear resistance is achieved in the tire 2. From this viewpoint, the ratio (WT/WA) is more preferably not less than 0.75. When the ratio (WT/WA) is set to be not greater than 0.90, the holding force of the band 40 is appropriately maintained. Since damage caused due to concentration of strain on the side portion is prevented, the tire 2 has good durability. From this viewpoint, the ratio (WT/WA) is more preferably not greater than 0.85.

In FIG. 1, a length indicated by reference character WB is the width of the band 40. The width WB of the band 40 is the distance in the axial direction from one end 40e of the band 40 to the other end 40e of the band 40.

In the tire 2, the ratio (WB/WT) of the width WB of the band 40 to the width WT of the tread 4 is preferably not less than 0.60 and not greater than 0.90. When the ratio (WB/WT) is set to be not less than 0.60, the band 40 effectively suppresses radial growth of the tire 2. Since the ground-contact shape of the tire 2 is less likely to change, good uneven wear resistance is achieved in the tire 2. From this viewpoint, the ratio (WB/WT) is more preferably not less than 0.75. When the ratio (WB/WT) is set to be not greater than 0.90, the holding force of the band 40 is appropriately maintained. Since an increase in strain due to the holding by the band 40 is prevented, the risk of occurrence of damage in the side portion is reduced. The tire 2 has good durability. From this viewpoint, the ratio (WB/WT) is more preferably not greater than 0.85.

As described above, the full band 44 has the ends 44e opposed to each other across the equator plane CL. The full band 44 extends in the axial direction from the equator plane CL toward each end 44e. Each end 44e of the full band 44 is located outward of the shoulder circumferential groove 30s in the axial direction. The full band 44 is located inward of the shoulder circumferential groove 30s in the radial direction.

In the tire 2, the full band 44 effectively suppresses deformation near the shoulder circumferential groove 30s. Since a shape change of the tire 2 is suppressed, the ground-contact shape of the tire 2 is less likely to change. In the tire 2, occurrence of uneven wear is suppressed. From this viewpoint, each end 44e of the full band 44 is preferably located outward of the shoulder circumferential groove 30s in the axial direction.

In FIG. 3, a length indicated by reference character SF is the distance in the axial direction from the shoulder circumferential groove 30s, that is, the inner end of the shoulder land portion 60s, to the end 44e of the full band 44.

In the tire 2, the ratio (SF/WS) of the distance SF in the axial direction from the shoulder circumferential groove 30s to the end 44e of the full band 44, to the width WS in the axial direction of the shoulder land portion 60s, is preferably not greater than 50%. Accordingly, the end 44e of the full band 44 is located at an appropriate distance from the end of the tread 4 which moves actively in a running state. Since fluctuation of the tension of the band cord 52 is suppressed, occurrence of a break of the band cord 52 is suppressed in the tire 2. The full band 44 of the tire 2 contributes to suppression of a shape change. From this viewpoint, the ratio (SF/WS) is more preferably not greater than 35% and further preferably not greater than 25%.

When the ratio (SF/WS) is set to be not less than 10%, the end 44e of the full band 44 is located at an appropriate distance from the shoulder circumferential groove 30s, specifically, the bottom of the shoulder circumferential groove 30s. In the tire 2, occurrence of damage starting from the bottom of the shoulder circumferential groove 30s is suppressed. Since the width of the full band 44 is ensured, the full band 44 contributes to suppression of a shape change of the tire 2. From this viewpoint, the ratio (SF/WS) is more preferably not less than 15%.

In FIG. 3, a length indicated by reference character We is the distance in the axial direction from the end 44e of the full band 44 to the inner end 46ue of the edge band 46.

In the tire 2, the distance We in the axial direction from the end 44e of the full band 44 to the inner end 46ue of the edge band 46 is preferably not less than 10 mm. Accordingly, the edge band 46 effectively holds the end 44e of the full band 44. Fluctuation of the tension of the band cord 52 included in the full band 44 is suppressed, so that occurrence of a break of the band cord 52 due to the fluctuation of the tension is suppressed. The full band 44 of the tire 2 can more stably exhibit the function of suppressing a shape change. From this viewpoint, the distance We in the axial direction is preferably not less than 20 mm.

In the tire 2, the position of the inner end 46ue of the edge band 46 is determined as appropriate in consideration of involvement in occurrence of damage starting from the bottom of the shoulder circumferential groove 30s. Therefore, a preferable upper limit of the distance We in the axial direction is not set. From the viewpoint of effectively suppressing occurrence of damage starting from the bottom of the shoulder circumferential groove 30s, the inner end 46ue of the edge band 46 is preferably located outward or inward of the bottom of the shoulder circumferential groove 30s in the axial direction. In the case where the inner end 46ue of the edge band 46 is located outward of the bottom of the shoulder circumferential groove 30s in the axial direction, the inner end 46ue of the edge band 46 is preferably located further outward of the shoulder circumferential groove 30s in the axial direction. In the case where the inner end 46ue of the edge band 46 is located inward of the bottom of the shoulder circumferential groove 30s in the axial direction, the inner end 46ue of the edge band 46 is preferably located further inward of the shoulder circumferential groove 30s in the axial direction.

In the tire 2, each end 44e of the full band 44 is located inward of each end 38e of the belt 38 in the axial direction. The belt 38 is wider than the full band 44. The belt 38 holds each end 44e of the full band 44. The belt 38 contributes to suppression of fluctuation of the tension of the band cord 52 included in the full band 44. Occurrence of a break of the band cord 52 due to fluctuation of the tension is suppressed, so that the full band 44 can stably exhibit the function of suppressing a shape change. From this viewpoint, each end 44e of the full band 44 is preferably located inward of each end 38e of the belt 38 in the axial direction.

A force acts on the full band 44 of the tire 2 so as to spread from the inner side toward the outer side in the radial direction. Due to this force, tension is generated in the band cord 52 of the full band 44. In the tire 2, the second belt ply 42B is located radially inward of the full band 44.

In the tire 2, the second belt ply 42B reduces the force acting on the full band 44, so that the tension of the band cord 52 included in the full band 44 is appropriately maintained. The second belt ply 42B contributes to suppression of fluctuation of the tension of the band cord 52. Since the second belt ply 42B is wider than the full band 44, fluctuation of the tension of the band cord 52 is effectively suppressed. In the tire 2, a break is less likely to occur in the band cord 52 of the full band 44. The full band 44 can stably exhibit the function of suppressing a shape change. From this viewpoint, at least one belt ply 42 of the plurality of belt plies 42 included in the belt 38 is preferably located inward of the full band 44 in the radial direction. The at least one belt ply 42 located inward of the full band 44 more preferably has a width larger than the width of the full band 44.

In the tire 2, the first belt ply 42A and the second belt ply 42B are located inward of the full band 44 in the radial direction. The first belt ply 42A and the second belt ply 42B contribute to suppression of fluctuation of the tension of the band cord 52. Since the first belt ply 42A and the second belt ply 42B are wider than the full band 44, fluctuation of the tension of the band cord 52 is more effectively suppressed. In the tire 2, a break is less likely to occur in the band cord 52 of the full band 44. The full band 44 can stably exhibit the function of suppressing a shape change. From this viewpoint, at least two belt plies 42 of the plurality of belt plies 42 included in the belt 38 are more preferably located inward of the full band 44 in the radial direction. The at least two belt plies 42 located inward of the full band 44 further preferably have a width larger than the width of the full band 44.

In the tire 2, in the radial direction, the second belt ply 42B is located inward of the full band 44, and the third belt ply 42C is located outward of the full band 44. In the tire 2, the full band 44 is interposed between the second belt ply 42B and the third belt ply 42C. As described above, the second belt ply 42B is wider than the full band 44. The third belt ply 42C is also wider than the full band 44. The plurality of belt plies 42 included in the belt 38 of the tire 2 include two belt plies 42 having a width larger than the width of the full band 44, and the full band 44 is interposed between the two belt plies 42 having a large width. In the tire 2, fluctuation of the tension of the band cord 52 included in the full band 44 is more effectively suppressed, so that a break is less likely to occur in the band cord 52 of the full band 44. The full band 44 of the tire 2 can stably exhibit the function of suppressing a shape change. From this viewpoint, in the tire 2, preferably, the plurality of belt plies 42 included in the belt 38 include two belt plies 42 having a width larger than the width of the full band 44, and the full band 44 is interposed between the two belt plies 42 having a large width.

In the tire 2, the first belt ply 42A, the second belt ply 42B, and the third belt ply 42C have a width larger than the width of the full band 44. In the radial direction, the first belt ply 42A and the second belt ply 42B are located inward of the full band 44, and the third belt ply 42C is located outward of the full band 44. The pair of edge bands 46 are located outward of the third belt ply 42C in the radial direction. As described above, each edge band 46 is located outward of the end 44e of the full band 44 in the radial direction. The edge band 46 overlaps the end 44e of the full band 44 via the third belt ply 42C in the radial direction.

In the tire 2, the full band 44 can stably exhibit the function of suppressing a shape change, and improvement of uneven wear resistance is achieved. From this viewpoint, preferably, in the tire 2, the plurality of belt plies 42 included in the belt 38 include the first belt ply 42A located on the inner side in the radial direction, the second belt ply 42B located outward of the first belt ply 42A in the radial direction, and the third belt ply 42C located outward of the second belt ply 42B in the radial direction, the first belt ply 42A, the second belt ply 42B, and the third belt ply 42C have a width larger than the width of the full band 44, the first belt ply 42A and the second belt ply 42B are located inward of the full band 44 in the radial direction, the third belt ply 42C is located outward of the full band 44 in the radial direction, and each edge band 46 located outward of the full band 44 overlaps the end 44e of the full band 44 via the third belt ply 42C in the radial direction.

As is obvious from the above description, according to the present invention, a heavy duty tire that can ensure durability and improve uneven wear resistance is obtained. The present invention exhibits a remarkable effect in a low-flatness heavy duty tire having a nominal aspect ratio of 65% or less.

### EXAMPLES

Hereinafter, the present invention will be described in further detail by means of examples, etc., but the present invention is limited by the appended claims only.

### [Example 1]

A heavy duty pneumatic tire (tire size = 355/50R22.5) having the basic structure shown in FIG. 1 and having specifications shown in Table 1 below was obtained.

The reinforcing layer of Example 1 has the configuration shown in FIG. 3. The fact that each end of the full band is located outward of the shoulder circumferential groove in the axial direction is represented as "OUT" in the cell for "full band end" in Table 1 below. The fact that the band has edge bands is represented as "Y" in the cell for "edge band" in Table 1. A bead having the configuration shown in FIG. 4 was used as a bead. The first apex of the bead has a round cross-sectional shape. The ratio (A/F) of the height A of the first apex to the height F of the turned-up portion was 0.70. The ratio (H1/H2) of the hardness H1 of the first apex to the hardness H2 of the second apex was 1.6. The hardness H2 of the second apex was 59.

In Example 1, the ratio (WT/WA) of the width WT of the tread to the cross-sectional width WA was 0.85. The ratio (WB/WT) of the width WB of the band to the width WT of the tread was 0.80. The distance We in the axial direction from the end of the full band to the inner end of the edge band was 25 mm. The ratio (SF/WS) of the distance SF in the axial direction from the shoulder circumferential groove to the end of the full band, to the width WS in the axial direction of the shoulder land portion, was 15%.

### [Comparative Example 1]

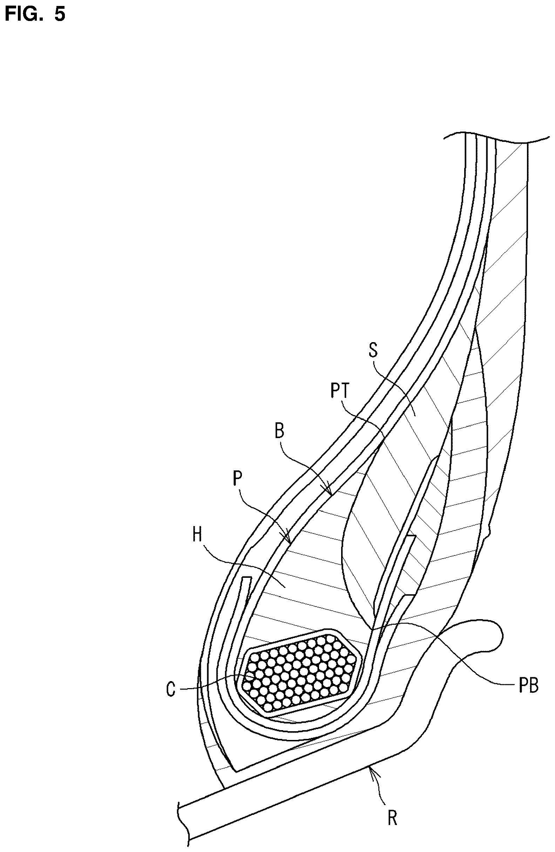

A tire of Comparative Example 1 was obtained in the same manner as Example 1, except that a bead B having the configuration shown in FIG. 5 was used, no edge band was provided, and each end of the full band was located inward of the shoulder circumferential groove in the axial direction. The fact that each end of the full band is located inward of the shoulder circumferential groove in the axial direction is represented as "IN" in the cell for "full band end" in Table 1 below. The fact that no edge band was provided to the band is represented as "N" in the cell for "edge band" in Table 1.

The bead B of Comparative Example 1 includes a core C and an apex P. The apex P includes a first apex H and a second apex S. The boundary between the first apex H and the second apex S extends between the top PT of the first apex H and the bottom PB of the second apex. The first apex H has a substantially triangular cross-sectional shape. The ratio (A/F) of the height A of the first apex H to the height F of the turned-up portion was 1.20. The ratio of the hardness of the first apex to the hardness of the second apex was 1.6, and the hardness of the second apex was 59.

In Comparative Example 1, the ratio (WT/WA) of the width WT of the tread to the cross-sectional width WA was 0.85. The ratio (WB/WT) of the width WB of the band to the width WT of the tread was 0.46. The width WB of the band was represented as the width of the full band.

### [Comparative Example 2]

A tire of Comparative Example 2 was obtained in the same manner as Comparative Example 1, except that each end of the full band was located outward of the shoulder circumferential groove in the axial direction. In Comparative Example 2, the ratio (WB/WT) was 0.74.

### [Comparative Example 3]

A tire of Comparative Example 3 was obtained in the same manner as Comparative Example 1, except that edge bands were provided and a reinforcing layer was formed so as to have the same configuration as that of the reinforcing layer of Example 1.

### [Example 2 and Comparative Example 4]

Tires of Example 2 and Comparative Example 4 were obtained in the same manner as Example 1, except that the height A of the first apex was changed such that the ratio (A/F) was set as shown in Table 1 below.

### [Profile Change]

A tire was fitted onto a rim (11.75×22.5) and inflated with air to adjust the internal pressure of the tire to a normal internal pressure. The tire was caused to run on a drum tester at a speed of 80 km/h for 1000 km, and a profile of the case line on the inner side of the shoulder circumferential groove was obtained. The profile of the case line was compared with the profile of the case line before running to confirm a change in profile before and after running. The results are represented as indexes according to the following ratings in Table 1 below. A higher value represents that a change in profile is reduced. In the running test, a normal load was applied to the tire.

| Change amount | Index |
|---|---|
| 0.0 mm to 0.5 mm | 100 |
| 0.6 mm to 1.0 mm | 95 |
| 1.1 mm to 1.5 mm | 90 |
| 1.6 mm to 2.0 mm | 85 |
| 2.1 mm to 2.5 mm | 80 |

### [Side Portion Surface Strain]

The strain generated on the surface of a side portion when a tire expanded was measured. The tire was fitted onto a rim (11.75×22.5) and inflated with air to adjust the internal pressure of the tire to 5% of a normal internal pressure. Accordingly, the state of the tire was adjusted to a reference state. The tire in the reference state was further inflated with air to adjust the internal pressure of the tire to the normal internal pressure to expand the tire. Accordingly, the state of the tire was adjusted to a normal state. The peak value of the strain in the radial direction generated on the surface of the side portion was measured in the process of adjusting the state of the tire from the reference state to the normal state. The result is represented as an index with the result of Example 1 being regarded as 100, in Table 1 below. A higher value represents that the strain generated on the surface of the side portion is smaller.

**[Table 1]**

| | Comparative Example 1 | Comparative Example 2 | Comparative Example 3 | Example 1 | Example 2 | Comparative Example 4 |
|---|---|---|---|---|---|---|
| Bead configuration | FIG. 5 | FIG. 5 | FIG. 5 | FIG. 4 | FIG. 4 | FIG. 4 |
| Full band end | IN | OUT | OUT | OUT | OUT | OUT |
| Edge band | N | N | Y | Y | Y | Y |
| A/F [-] | 1.20 | 1.20 | 1.20 | 0.70 | 1.00 | 1.20 |
| Profile change | 85 | 90 | 100 | 100 | 100 | 100 |
| Side portion surface strain | 90 | 90 | 85 | 100 | 95 | 80 |

As shown in Table 1, in the Examples, a profile change is suppressed, the strain generated in the side portion is reduced, durability is ensured, and uneven wear resistance is improved. From the evaluation results, advantages of the present invention are clear.

The above-described technology for ensuring durability and improving uneven wear resistance can be applied to various tires.

## Claims

1. A heavy duty tire (2) having a nominal aspect ratio of 65% or less, the heavy duty tire (2) comprising:
a tread (4) that comes into contact with a road surface;
a pair of sidewalls (6) that are each connected to an end of the tread (4) and located inward of the tread (4) in a radial direction;
a pair of beads (10) that are each located inward of the sidewall (6) in the radial direction;
a carcass (12) that is located inward of the tread (4) and the pair of sidewalls (6); and
a band (40) that is located between the tread (4) and the carcass (12) in the radial direction and includes a spirally wound band cord (52), wherein
at least three circumferential grooves (30) are formed on the tread (4), whereby at least four land portions (60) are formed in the tread (4),
among the at least three circumferential grooves (30), a circumferential groove (30) located on each outer side in an axial direction is a shoulder circumferential groove (30s),
a land portion (60) located outward of the shoulder circumferential groove (30s) in the axial direction is a shoulder land portion (60s),
each bead (10) includes a core (32), a first apex (62) located outward of the core (32) in the radial direction, and a second apex (64) located outward of the first apex (62) in the radial direction,
the carcass (12) includes a carcass ply (36),
the carcass ply (36) includes a ply body (36a) extending between one bead (10) and the other bead (10), and a pair of turned-up portions (36b) connected to the ply body (36a) and turned up around the beads (10) from an inner side toward the outer side in the axial direction,
the band (40) includes a full band (44) having ends (44e) opposed to each other across an equator plane (CL), and a pair of edge bands (46) located outward of the ends (44e) of the full band (44) in the radial direction, and
the first apex (62) has a higher hardness than the second apex (64) wherein the hardness is measured according to the standards of JIS K6253 under a temperature condition of 23°C using a type A durometer,
**characterized in that**
in the radial direction, a position of a top (PT) of the first apex (62) coincides with a position of an end (36f) of the turned-up portion (36b), or the top (PT) of the first apex (62) is located inward of the end (36f) of the turned-up portion (36b), and
each end (44e) of the full band (44) is located outward of the shoulder circumferential groove (30s) in the axial direction.

2. The heavy duty tire (2) according to claim 1, wherein a top surface, of the first apex (62), which forms a boundary with the second apex (64) has a contour that is curved outward in the radial direction.

3. The heavy duty tire (2) according to claim 1 or 2, wherein a ratio (A/F) of a height (A) of the first apex (62) to a height (F) of the turned-up portion (36b) is not less than 0.45.

4. The heavy duty tire (2) according to any one of claims 1 to 3, wherein a ratio (H1/H2) of a hardness (H1) of the first apex (62) to a hardness (H2) of the second apex (64) is not less than 1.4 and not greater than 2.0.

5. The heavy duty tire (2) according to any one of claims 1 to 4, wherein a ratio (SF/WS) of a distance (SF) in the axial direction from the shoulder circumferential groove (30s) to the end (44e) of the full band (44), to a width (WS) in the axial direction of the shoulder land portion (60s), is not less than 10% and not greater than 50%.

6. The heavy duty tire (2) according to any one of claims 1 to 5, wherein a distance (We) in the axial direction from the end (44e) of the full band (44) to an inner end (46ue) of the edge band (46) is not less than 10 mm.

## Patentansprüche

1. Schwerlastreifen (2) mit einem nominellen Aspektverhältnis von 65% oder weniger, wobei der Schwerlastreifen (2) umfasst:
eine Lauffläche (4), die mit einer Straßenoberfläche in Kontakt kommt;
ein Paar von Seitenwänden (6), die jeweils mit einem Ende der Lauffläche (4) verbunden sind und in einer radialen Richtung innerhalb der Lauffläche (4) angeordnet sind;
ein Paar von Wülsten (10), die jeweils in der radialen Richtung innerhalb der Seitenwand (6) angeordnet sind;
eine Karkasse (12), die innerhalb der Lauffläche (4) und des Paares von Seitenwänden (6) angeordnet ist; und
ein Band (40), das in der radialen Richtung zwischen der Lauffläche (4) und der Karkasse (12) angeordnet ist und einen spiralförmig gewundenen Bandkord (52) aufweist,
wobei
zumindest drei Umfangsrillen (30) in der Lauffläche (4) gebildet sind, wodurch zumindest vier Landabschnitte (60) in der Lauffläche (4) gebildet sind,
unter den zumindest drei Umfangsrillen (30) eine Umfangsrille (30), die in einer axialen Richtung auf einer jeweiligen Außenseite angeordnet ist, eine Schulterumfangsrille (30s) ist,
ein Landabschnitt (60), der in der axialen Richtung außerhalb der Schulterumfangsrille (30s) angeordnet ist, ein Schulterlandabschnitt (60s) ist,
jede Wulst (10) einen Kern (32), einen Scheitelabschnitt (62), der in der radialen Richtung außerhalb des Kerns (32) angeordnet ist, und einen zweiten Scheitelabschnitt (64) umfasst, der in der radialen Richtung außerhalb des ersten Scheitelabschnitts (62) angeordnet ist,
die Karkasse (12) eine Karkassenschicht (36) aufweist,
die Karkassenschicht (36) einen Karkassenkörper (36a), der sich zwischen einer Wulst (10) und der anderen Wulst (10) erstreckt, und ein Paar von umgeschlagenen Abschnitten (36b) umfasst, die mit dem Schichtkörper (36a) verbunden sind und in der axialen Richtung von einer Innenseite in Richtung der Außenseite um die Wülste (10) herum umgeschlagen sind,
das Band (40) ein volles Band (44) mit Enden (44e), die über eine Äquatorebene (CL) hinweg einander entgegengesetzt sind, und ein Paar von Randbändern (46) umfasst, die in der radialen Richtung außerhalb der Enden (44e) des vollen Bandes (44) angeordnet sind, und
der erste Scheitelabschnitt (62) ein größere Härte als der zweite Scheitelabschnitt (64) aufweist, wobei die Härte gemäß den Standards von JIS K6253 unter einer Temperaturbedingung von 23°C unter Verwendung eines Typ-A-Durometers gemessen wird,
**dadurch gekennzeichnet, dass**
in der radialen Richtung eine Position einer Spitze (PT) des ersten Scheitelabschnitts (62) mit einer Position eines Endes (36f) des umgeschlagenen Abschnitts (36b) zusammenfällt oder die Spitze (PT) des ersten Scheitelabschnitts (62) innerhalb des Endes (36f) des umgeschlagenen Abschnitts (36b) angeordnet ist, und
jedes Ende (44e) des vollen Bandes (44) in der axialen Richtung außerhalb der Schulterumfangsrille (30s) angeordnet ist.

2. Schwerlastreifen (2) nach Anspruch 1, wobei eine obere Fläche des ersten Scheitelabschnitts (62), die eine Grenze mit dem zweiten Scheitelabschnitt (64) bildet, eine Kontur aufweist, die in der radialen Richtung nach außen gekrümmt ist.

3. Schwerlastreifen (2) nach Anspruch 1 oder 2, wobei ein Verhältnis (A/F) einer Höhe (A) des ersten Scheitelabschnitts (62) zu einer Höhe (F) des umgeschlagenen Abschnitts (36b) nicht kleiner als 0,45 ist.

4. Schwerlastreifen (2) nach einem der Ansprüche 1 bis 3, wobei ein Verhältnis (H1/H2) eine Härte (H1) des ersten Scheitelabschnitts (62) zu einer Härte (H2) des zweiten Scheitelabschnitts (64) nicht kleiner als 1,4 und nicht größer als 2,0 ist.

5. Schwerlastreifen (2) nach einem der Ansprüche 1 bis 4, wobei ein Verhältnis (SF/WS) einer Distanz (SF) in der axialen Richtung von der Schulterumfangsrille (30s) bis zu dem Ende (44e) des vollen Bandes (44) zu einer Breite (WS) des Schulterlandabschnitts (60s) in der axialen Richtung nicht kleiner als 10% und nicht größer als 50% ist.

6. Schwerlastreifen (2) nach einem der Ansprüche 1 bis 5, wobei eine Distanz (We) in der axialen Richtung von dem Ende (44e) des vollen Bandes (44) bis zu einem inneren Ende (46ue) des Randbandes (46) nicht kleiner als 10 mm ist.

## Revendications

1. Pneumatique pour service intensif (2) ayant un rapport d'aspect nominal de 65 % ou moins, le pneumatique pour service intensif (2) comprenant :
une bande de roulement (4) qui vient en contact avec une surface routière ;
une paire de parois latérales (6), chacune étant connectée à une extrémité de la bande de roulement (4) et située à l'intérieur de la bande de roulement (4) dans une direction radiale ;
une paire de talons (10), chacun étant situé à l'intérieur de la paroi latérale (6) dans la direction radiale ;
une carcasse (12) qui est située à l'intérieur de la bande de roulement (4) et de la paire de parois latérales (6) ; et
une bande (40) qui est située entre la bande de roulement (4) et la carcasse (12) dans la direction radiale et qui inclut un câblé de bande enroulé en spirale (52), dans lequel
au moins trois rainures circonférentielles (30) sont formées sur la bande de roulement (4), moyennant quoi au moins quatre portions en relief (60) sont formées dans la bande de roulement (4),
parmi lesdites au moins trois rainures circonférentielles (30), une rainure circonférentielle (30) située sur chaque côté extérieur dans une direction axiale est une rainure circonférentielle d'épaulement (30s),
une portion en relief (60) située à l'extérieur de la rainure circonférentielle d'épaulement (30s) dans la direction axiale est une portion en relief d'épaulement (60s),
chaque talon (10) inclut une âme (32), un premier apex (62) situé à l'extérieur de l'âme (32) dans la direction radiale, et un second apex (64) situé à l'extérieur du premier apex (62) dans la direction radiale,
la carcasse (12) inclut une nappe de carcasse (36),
la nappe de carcasse (36) inclut un corps de nappe (36a) s'étendant entre un talon (10) et l'autre talon (10), et une paire de portions retroussées (36b) connectées au corps de nappe (36a) et retroussées autour des talons (10) depuis un côté intérieur vers le côté extérieur dans la direction radiale,
la bande (40) inclut une bande complète (44) ayant des extrémités (44e) opposées les unes aux autres à travers un équateur de pneumatique (CL), et une paire de bandes de bord (46) situées à l'extérieur des extrémités (44e) de la bande complète (44) dans la direction radiale, et
le premier apex (62) a une dureté plus élevée que le second apex (64), la dureté étant mesurée selon les standards de la norme industrielle japonaise JIS K6253 sous une condition de température de 23 °C en utilisant un duromètre de type A,
**caractérisé en ce que**
dans la direction radiale, une position d'un sommet (PT) du premier apex (62) coïncide avec une position d'une extrémité (36f) de la portion retroussée (36b), ou le sommet (PT) du premier apex (62) est situé à l'intérieur de l'extrémité (36f) de la portion retroussée (36b), et
chaque extrémité (44e) de la bande complète (44) est située à l'extérieur de la rainure circonférentielle d'épaulement (30s) dans la direction axiale.

2. Pneumatique pour service intensif (2) selon la revendication 1, dans lequel une surface de sommet du premier apex (62), qui forme une frontière avec le second apex (64), a un contour qui est incurvé à l'extérieur dans la direction radiale.

3. Pneumatique pour service intensif (2) selon la revendication 1 ou 2, dans lequel un rapport (A/F) d'une hauteur (A) du premier apex (62) sur une hauteur (F) de la portion retroussée (36b) n'est pas inférieur à 0,45.

4. Pneumatique pour service intensif (2) selon l'une quelconque des revendications 1 à 3, dans lequel un rapport (H1/H2) d'une dureté (H1) du premier apex (62) sur une dureté (H2) du second apex (64) n'est pas inférieur à 1,4 et n'est pas supérieur à 2,0.

5. Pneumatique pour service intensif (2) selon l'une quelconque des revendications 1 à 4, dans lequel un rapport (SF/WS) d'une distance (SF) dans la direction axiale depuis la rainure circonférentielle d'épaulement (30s) jusqu'à l'extrémité (44e) de la bande complète (44), sur une largeur (WS) dans la direction axiale de la portion en relief d'épaulement (60s), n'est pas inférieur à 10 % et n'est pas supérieur à 50 %.

6. Pneumatique pour service intensif (2) selon l'une quelconque des revendications 1 à 5, dans lequel une distance (We) dans la direction axiale depuis l'extrémité (44e) de la bande complète (44) jusqu'à une extrémité intérieure (46ue) de la bande de bord (46) n'est pas inférieure à 10 mm.
